# FASCICULE DE BREVET EUROPEEN

(11) **EP 3 755 140 B1**
(45) Date de publication et mention de la délivrance du brevet: **09.10.2024**
(21) Numéro de dépôt: 19710759.2
(22) Date de dépôt: 19.02.2019
(51) Int. Cl.: A01G 9/02, E04C 1/39

(54) **DISPOSITIF DE VÉGÉTALISATION MODULAIRE D'UN BÂTIMENT**
VORRICHTUNG ZUR MODULAREN VEGETATION EINES GEBÄUDES
DEVICE FOR MODULAR VEGETATION OF A BUILDING

(30) Priorité: 23.02.2018 FR 1851609
(43) Date de publication de la demande: 30.12.2020
(73) Titulaire: Boudrandi, Stéphane, 13100 Le Tholonet (FR); Dumortier, Benoît, 97460 Saint Paul (FR)
(72) Inventeur: DUMORTIER, Benoît, 97460 Saint Paul (FR)
(74) Mandataire: IP Trust
(86) Numéro de dépôt international: PCT/FR2019/050369
(87) Numéro de publication internationale: WO 2019/162607

(56) Documents cités:
- WO-A1-2013/113884
- WO-A2-2011/033316
- FR-A1- 2 850 527
- FR-A1- 2 902 602
- FR-A1- 2 934 460
- FR-B1- 2 850 527
- JP-A- 2014 036 620
- US-A1- 2011 093 122
- US-A1- 2011 197 504

## Description

### Domaine de l'invention

La présente invention concerne le domaine de la végétalisation de bâtiments, de constructions d'ouvrages et du génie civil, plus particulièrement le revêtement extérieur, les toitures et la décoration de telles constructions, et a pour objet un dispositif de végétalisation modulaire de façades, surface horizontales (toitures), inclinées (sans limitation de pente) ou verticales (murs), murs ou analogues par une flore telle que des graminées, des plantes semi-aquatiques, sedums, etc.) et notamment un dispositif connecté de végétalisation modulaire d'un bâtiment.

La végétalisation des bâtiments offre de nombreux avantages pour la ville :
Elle participe à la rétention des eaux pluviales : 4 à 38 mm selon l'épaisseur du substrat, réduisant la saturation du réseau d'évacuation et diminuant les risques d'inondation.

Elle permet de développer la biodiversité, les espaces végétalisés offrant des lieux de refuge, de repos, de nourrissage et de reproduction pour la faune.

Elle améliore l'isolation et l'inertie thermique des bâtiments, ainsi que l'isolation phonique.

Elle régule aussi la température ambiante en ville car l'air est rafraîchi et humidifié grâce au phénomène d'évapotranspiration, contribuant à lutter contre le phénomène d'îlots de chaleur.

La végétalisation améliore aussi la qualité de l'air en absorbant les particules en suspension telles que les poussières et substances polluantes.

En outre, la présence de végétaux en ville améliore le cadre urbain en embellissant les façades des structures les moins esthétiques, à l'image des bâtiments industriels ou logistiques.

Les façades végétalisées aident à lutter contre le phénomène d'îlot de chaleur, évitant aux façades inertes d'absorber la chaleur tandis que les plantes rafraîchissent l'air ambiant et à réduire le taux de dioxyde d'azote et de particules grâce aux biofiltres des plantes permettant de diminuer la teneur de l'air en composés organiques volatils (benzène acétone, perchloréthylène...).

Les végétaux ne s'enracinent pas dans le sol mais poussent directement dans ou sur un substrat inerte qui couvre toute la surface du support, par exemple un mur. Il existe plusieurs procédés pour la végétalisation suspendue d'un mur ou d'une toiture :
On peut planter les végétaux dans des bacs spécifiques remplis de substrat et placés dans la structure métallique. L'installation est chevillée au mur ou fixée à l'aide de rails. Une lame d'air est conservée entre le complexe végétalisé et le mur. Le mur végétal est irrigué par le haut à l'aide de tuyaux perforés raccordés au circuit fermé d'alimentation en eau et en nutriments.

La végétalisation suspendue peut aussi être plantée dans des poches de feutres agrafées sur une structure porteuse. La paroi est irriguée par le haut. Une solution nutritive est ajoutée dans le système d'irrigation. Une couche d'air est ménagée derrière la structure, indispensable pour éviter tous risque lié à l'humidité au niveau du mur ou de la toiture support.

### Etat de la technique

On connaît dans l'état de la technique le brevet français FR2902602 dispositif comprenant un substrat de culture pour les plantes, qui est rigidifié pour tenir sensiblement à la verticale, et au moins une caissette obturable par un couvercle, ladite caissette et son couvercle étant constitués par une matière isolante rigide ou semi-rigide et étant prévus pour loger ledit substrat, tandis que le fond de la caissette et/ou le couvercle sont pourvus d'ouvertures destinées à être traversées par les racines des plantes pour leur implantation dans le substrat, lesdites plantes faisant saillie de la caissette par lesdites ouvertures.

On connaît aussi le brevet FR280527 concernant un procédé de réalisation d'un revêtement végétal prévu pour être disposé sur tout support, sol naturel, hors sol, horizontal, incliné, vertical, en surplomb, caractérisé en ce que l'on assure les opérations suivantes :
- prévoir une surface de travail de quelque nature que ce soit, présentant une résistance mécanique à l'enfoncement telle que le sol naturel, une dalle de pierre concassée constituant le sol artificiel d'une serre ou une dalle béton, dépose d'un support de culture étanche de façon à isoler la surface de travail,
- déposer une nappe d'arrimage,
- déposer un réseau d'hydratation composé de tubes souples munis de goutteurs, et
- déposer une couche d'un substrat de culture incluant le matériel végétal à fort pouvoir tampon et de rétention d'eau, de façon à noyer ladite nappe d'arrimage et ledit réseau à une profondeur donnée sensiblement constante dans cette couche.

La demande de brevet WO2013113884 décrit un système pour former un élément textile végétalisé comprenant une première couche imperméable présentant une face dorsale et une face frontale, une deuxième couche comprenant un feutre synthétique doté d'un pouvoir de rétention d'eau et présentant une face dorsale et une face frontale, ladite face dorsale de ladite deuxième couche faisant face à ladite face frontale de ladite première couche imperméable et une troisième couche de polymère synthétique présentant des ouvertures ainsi qu'une face dorsale et une face frontale, ladite face dorsale de ladite troisième couche faisant face à ladite face frontale de ladite seconde couche comprenant un feutre synthétique, caractérisé en ce que ladite première couche imperméable est une toile souple en polymère présentant une densité comprise entre 300 et 1200 g/m2, de préférence entre 500 et 1000 g/m2, préférentiellement entre 600 et 800 g/m2 et en ce que ladite troisième couche est une grille en polymère souple, lesdites première et troisième couches étant soudées entre elles sur leur pourtour afin d'assurer l'étanchéité dudit système pour former un élément textile végétalisé, ladite soudure étanche étant compatible avec les matériaux utilisés pour former les différentes couches.

La demande de brevet japonaise JP2014036620 décrit un matériau de culture de plantes comprenant un tapis de fibres de noix de coco et un treillis métallique tridimensionnel.

La demande de brevet WO2011033316 concerne un milieu de croissance pour plantes comprenant plus de 50% en poids de laine lorsque le milieu de croissance est sec.

On connaît aussi le brevet FR2934460 décrivant une structure qui se compose d'un élément support comportant au moins un panneau plan ou sensiblement plan, dont l'une des surfaces, destinée à s'étendre verticalement ou sensiblement verticalement et à venir à l'opposé de la surface verticale ou sensiblement verticale à recouvrir, est recouverte d'un substrat de culture servant au développement des plantes à cultiver, lequel substrat de culture se présente sous la forme d'une superposition de nappes, avec, partant dudit élément support :
- une nappe intérieure de feutre horticole imputrescible hydrophile, recouverte d'un premier grillage de maintien, puis
- une nappe extérieure de mousse végétale, recouverte par un second grillage de maintien.

### Inconvénients de l'art antérieur

Les solutions de l'art antérieur présentent différents inconvénients.

En premier le poids des modules résultant de l'utilisation de plusieurs couches de matériaux relativement denses et lourds, difficilement démontables, et nécessitant la plupart du temps un renforcement des structures existantes ou bien la création d'une structure ad hoc.

Ensuite, certaines solutions de l'art antérieur sont impossibles à être installées verticalement, ou sur des pentes supérieures à 60°.

La solution présentée par le brevet FR290602 a pour but un changement aisé des plantations pour un renouvellement des plantes ou un changement de décor. C'est pourquoi l'inventeur de cette solution connue a cherché et mis au point un dispositif pratique qui facilite le changement des plantes constituée par une cassette avec un couvercle, qui est une structure lourde, inadaptée à la culture directe de végétations sur la structure même.

Enfin, les performances thermiques des dispositifs de l'art antérieur restent limitées.

### Solutions apportées par l'invention

Afin de remédier à ces inconvénients, la présente invention concerne selon son acception la plus générale un dispositif présentant les caractéristiques énoncés dans la revendication 1.

Elle concerne notamment un dispositif connecté de végétalisation modulaire des bâtiments, constitué par des modules à structure plate présentant sur l'une de ses grandes faces des éléments de végétation apparents, lesdits modules étant montés de manière amovible sur la structure porteuse en masquant dans sa majorité cette dernière, chaque module se présentant sous la forme d'un support de constitution générale plate, de forme parallélépipédique, de faible épaisseur par rapport à ses dimensions latérales et avec une paroi de fond et au moins deux parois latérales pleines, la face ouverte du module qui est opposée au fond autorisant le passage des éléments de végétation, caractérisé en ce que lesdits modules sont constitués par une plaque de fond rigide et étanche recouverte par un complexe de culture multicouche comprenant successivement au moins un premier matériau synthétique fibreux, un grillage souple et un deuxième matériaux synthétiques fibreux.

Ce dispositif selon l'invention présente optionnellement une ou plusieurs des caractéristiques additionnelles suivantes :
- l'un au moins desdits matériau synthétique fibreux est constitué par une nappe de feutre de fibres synthétiques d'un poids compris entre 300 et 800 grammes par mètre carré cardées ou aiguilletées sur un film en polyéthylène ou en polypropylène.
- ledit complexe présente une épaisseur comprise entre 15 et 40 millimètres.
- ledit complexe est imprégné d'une matière nutritive.
- ledit complexe est pré-ensemencé.
- ledit complexe est fixé sur ladite plaque rigide sur tous ses bords.
- ladite plaque rigide présente à son bord supérieur un conduit présentant des perçages pour l'écoulement d'eau sur ledit complexe.

En règle générale, seul le module situé en partie haute est équipé de ce conduit, l'irrigation des modules inférieurs s'effectuant grâce à la gravité et par capillarité grâce au pouvoir hydrophile du complexe. Dans le cas où il faille faire se chevaucher de nombreux modules, on pourra équiper d'autres modules d'un conduit d'irrigation supplémentaire afin de rendre l'irrigation du dispositif plus homogène.

Le dispositif selon l'invention comporte dans sa partie inférieure une gouttière de récupération d'eau.

Les bords transversaux desdites plaques rigides présentent des profils complémentaires permettant de canaliser l'irrigation et facilitant l'assemblage des panneaux adjacents.

Optionnellement, le dispositif comporte au moins un programmateur électronique activant une électrovanne ou une pompe déclenchée via une sonde d'humidité positionnée sur une zone dudit complexe afin d'irriguer lesdits modules végétalisés en fonction des conditions climatiques du moment (pluie, sécheresse).

L'invention concerne aussi un système de végétalisation modulaire d'un bâtiment selon la revendication 7 comportant d'une part, une structure porteuse et d'autre part au moins un module végétalisé fixé par compression sur ladite structure porteuse par des vis auto perceuses Inox avec rondelle EPDM comprimant les modules végétalisés en plusieurs points à la structure porteuse fixée aux murs ou à la toiture et permettant l'assemblage du dispositif.

Optionnellement les modules végétalisés:
- comportent en outre un moyen d'alimentation en eau desdits modules,
- comportent également un système connecté de mesure des indicateurs climatiques (humidité, température, pression atmosphérique...) et de transmission de ces informations à distance à un serveur central permettant l'envoi d'alerte en cas de dysfonctionnement du système automatisé.
- sont montés de manière amovible sur la structure porteuse en masquant dans sa majorité cette dernière,
- comportent au moins une source d'énergie renouvelable, par exemple une éolienne (9) ou un panneau photovoltaïque positionné sur une zone dudit complexe afin d'alimenter les éléments de celui-ci (programmateur, électrovanne, sondes...) utilisant le courant électrique pour fonctionner.

L'invention concerne aussi un système de végétalisation d'un bâtiment comportant d'une part, une structure porteuse et d'autre part au moins un module végétalisé fixé sur ladite structure porteuse par des vis auto perceuses Inox avec rondelle EPDM en plusieurs points desdits modules.

Avantageusement, lesdits modules sont montés de manière amovible sur la structure porteuse en masquant dans sa majorité cette dernière.

### Description détaillée d'un exemple non limitatif de réalisation

La présente invention sera mieux comprise, grâce à la description ci-après, qui se rapporte à un mode de réalisation préféré, donné à titre d'exemple non limitatif, et expliqué avec référence aux dessins schématiques annexés, dans lesquels :
- La figure 1 est une vue en coupe d'un module végétalisé formant le dispositif de végétalisation selon l'invention ;
- La figure 2 est une vue partielle en perspective d'un module végétalisé constituant le dispositif de végétalisation selon l'invention ;
- La figure 3 est une vue partielle en perspective de l'assemblage de deux modules végétalisés adjacents constituants le dispositif de végétalisation selon l'invention ;
- la figure 4 représente une vue en perspective d'un module végétalisé équipé selon l'invention.

### Description de la structure d'un module

Le module comprend un cadre rigide avec un fond formé d'une plaque rigide (1) d'une épaisseur de 19 millimètres, et plus généralement d'une épaisseur comprise entre 10 et 30 millimètres, en PVC ou en bois contreplaqué ou tout autre matériau rigide pouvant servir au même usage.

Le complexe de culture est formé par deux couches de feutrine synthétique (2, 3) d'une épaisseur de 10 millimètres, et d'un poids allant de 400 à 600 g/m².

Les nappes de feutrines sont formées de fibres synthétiques cardées et nappées, aiguilletées sur un film de polyéthylène ou de polypropylène. Ces nappes sont fortement hydrophiles et permettent de retenir environ 4 litres d'eau par m2.

Une âme formée par une grille souple (4) en matière plastique, avec des mailles présentant une section de quelques millimètres, par exemple 5 millimètres, est disposée entre les deux nappes (2, 3).

Selon un exemple particulier de réalisation, la nappe (2) est une feutrine multicolore en polypropylène tissée et renforcée d'un poids de 600 g/m² agrafée à la plaque (1).

La nappe (3) est une nappe de feutrine acrylique non tissée d'un poids de 400 g/m² également agrafée sur la plaque (1).

Le complexe exposé à l'air ambiant recueille par dépôt les particules organiques transportées par le vent (spores, graines,...) qui ensemencent et enrichissent naturellement le complexe de culture.

Un conduit (6) longe l'arête supérieure du complexe pour l'alimentation en eau. Ce conduit est poreux ou présente des perforations pour permettre l'irrigation du complexe de culture.

### Assemblage des modules

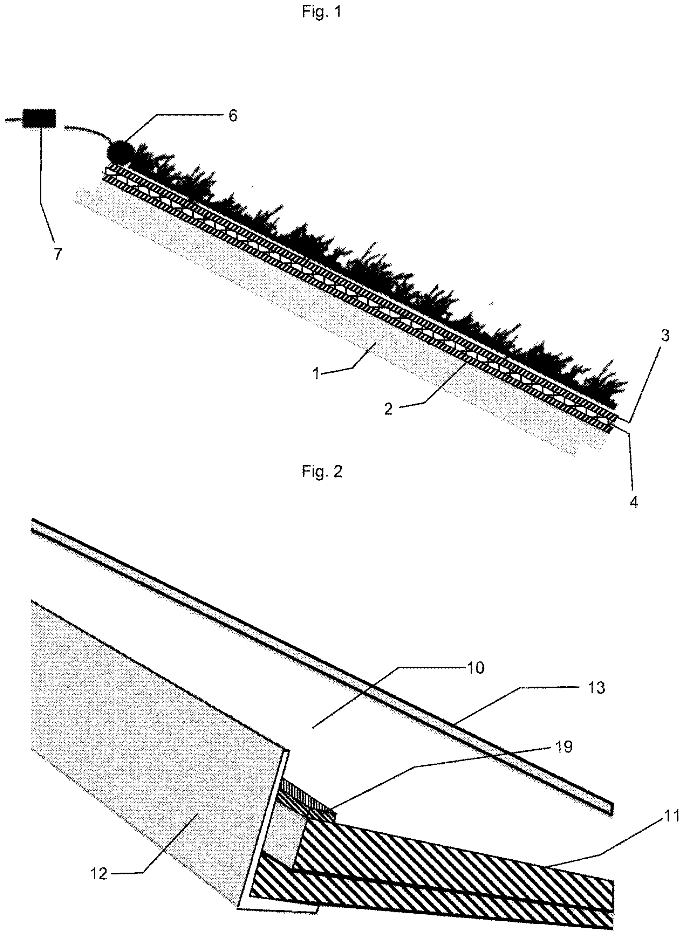

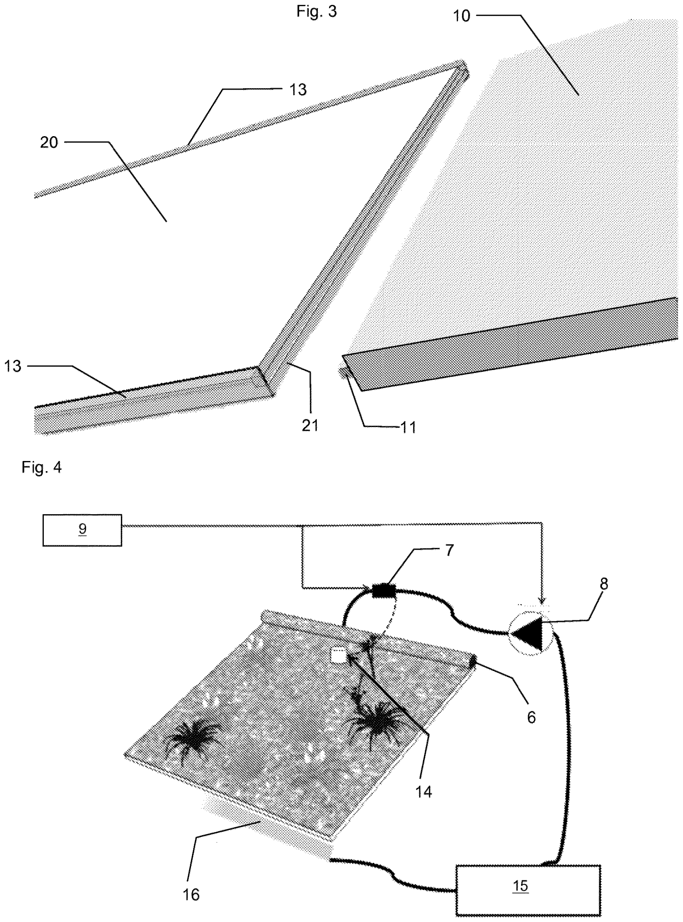

Les figures 2 et 3 représentent des vues en détail et en perspective des bords transversaux du module.

L'assemblage se fait par un rapprochement bord à bord entre le bord inférieur d'un premier module avec le bord supérieur du module adjacent. A cet effet, le bord inférieur du premier module (10) présente un rebord (11) s'étendant du coté extérieur de la plaque (10) complémentaire d'un rebord (21) s'étendant du coté intérieur de la plaque adjacente (20). Bien sûr, d'autres modes d'assemblage bord à bord sont possibles, par exemple un assemblage de type « rainure - languette ».

Les bords latéraux du module présentent des cornières (12, 13) en métal ou en plastique, dont la hauteur dépasse légèrement la hauteur cumulée de la plaque (2) et du complexe de culture.

Les modules comportent deux méplats en aluminium situés sur les parties latérales et rivetées par le dessous, présentant par exemple une longueur de 125 centimètres correspondant à la hauteur d'un module, une largeur de 20 millimètres et une épaisseur de 2 millimètres. Ces méplats permettent d'éviter la déformation de la plaque (1) lors de la fixation par une griffe de liaison avec le support.

### Pilotage de l'irrigation du complexe de culture

Pour l'arrosage de la paroi végétalisée, le programmateur électronique commande un fonctionnement cyclique de l'électrovanne permettant d'assurer une humidification constante de la paroi, avec par exemple une séquence de 2 minutes d'arrosage toutes les 40 minutes.

Afin d'assurer l'efficacité de l'humidification du complexe végétal, des sondes d'humidité contrôlent le déclenchement de l'irrigation et intègrent un système connecté permettant l'envoi d'alertes en cas de dysfonctionnement du système.

Un deuxième type de sonde peut être installé au sein de la végétation pour assurer que l'intégralité de la feutrine soit humide.

Le système comprend un circuit d'alimentation en eau assurant le débit d'eau dans le conduit (6) par l'intermédiaire d'une électrovanne ou d'une pompe (8) alimentée optionnellement par une source d'énergie renouvelable, par exemple une éolienne (9) ou un panneau photovoltaïque. Un capteur d'humidité (14) fournit une information sur le degré hygrométrique à un programmateur électronique commandant le fonctionnement d'une électrovanne (7) ou d'une pompe. Ce circuit permet également l'apport d'une solution nutritive aux végétaux par l'adjonction d'une pompe doseuse d'engrais.

Le système comprend également un dispositif de transmission des informations à distance composé d'au moins un boîtier moniteur émetteur WIFI étanche équipé d'une sonde digitale d'humidité/température/pression atmosphérique et d'un récepteur WIFI raccordé au réseau permettant l'envoi d'alerte en cas de défaillance du système automatisé.

Une gouttière (16) récupère les eaux de ruissellement et la solution nutritive excédentaire et alimente un réservoir (15).

### Variantes de réalisation

Selon un mode de réalisation particulier et non limitatif, l'épaisseur de la plaque PVC est de 10 mm afin d'alléger le poids global.

Le support de culture est dépourvu de feutrine de fond (600G/M2) supprimée et est constitué seulement d'un grillage souple et d'une feutrine apparente de manière à réduire le poids global à saturation d'eau.

Les cornières latérales sont en PVC souple ou en aluminium 20x20 mm épaisseur 1,5 mm. Elles sont rivetées ou collées à l'aide d'un mastic colle polyuréthane à la plaque PVC et rendues étanches via du silicone. Elles sont destinées à canaliser l'eau sur la face végétalisée.

La fixation à la structure porteuse s'effectue via des vis auto-perceuse en acier inoxydable avec rondelle EPDM comprimant les modules végétalisés en plusieurs points à la structure porteuse fixée aux murs ou à la toiture et permettant l'assemblage du dispositif.

Le chevauchement des modules s'effectue à présent grâce à une découpe à 45° des bordures inférieures et supérieures.

Un joint silicone est appliqué sur ces bordures afin d'assurer l'étanchéité des modules une fois installés en compression.

## Revendications

1. - Dispositif de végétalisation modulaire d'un bâtiment, constitué par plusieurs modules (10, 20) présentant chacun sur l'une de leurs grandes faces des éléments de végétation apparents, lesdits modules (10, 20) se présentant sous la forme d'un support de constitution générale plate, de forme parallélépipédique, de faible épaisseur par rapport à ses dimensions latérales et avec un fond formé d'une plaque rigide (1) et au moins deux parois latérales pleines (12, 13),, la face ouverte du module qui est opposée audit fond (1) autorisant le passage des éléments de végétation, ledit fond (1) étant recouvert par un complexe de culture multicouche comprenant successivement au moins un premier matériau synthétique fibreux (2) et un grillage souple (4), **caractérisé en ce que**
- ledit complexe est formé par deux nappes de feutrine synthétique (2, 3) d'une épaisseur de 10 millimètres, et d'un poids allant de 400 à 600 g/m², et d'une âme formée par une grille souple (4) en matière plastique, avec des mailles présentant une section de quelques millimètres, disposée entre lesdites deux nappes (2, 3)
- l'assemblage entre modules adjacents (10, 20) est assuré par un rapprochement bord à bord entre un bord inférieur d'un premier module avec un bord supérieur d'un module adjacent, le bord inférieur du premier module (10) présentant un rebord (11) s'étendant du coté extérieur de la plaque (10), complémentaire d'un rebord (21) s'étendant du coté intérieur de la plaque adjacente (20)
- ledit dispositif comportant un conduit (6) poreux ou présentant des perforations longeant une arête supérieure pour l'alimentation en eau et dans une partie inférieure une gouttière de récupération d'eau (16).

2. - Dispositif de végétalisation d'un bâtiment selon la revendication 1 **caractérisé en ce que** l'un au moins desdits matériau synthétique fibreux (2, 3) est constitué par une nappe de feutre de fibres synthétiques cardées d'un poids compris entre 300 et 800 grammes par mètre carré cardées ou aiguilletées sur un film en polyéthylène ou en polypropylène.

3. - Dispositif de végétalisation d'un bâtiment selon la revendication 1 **caractérisé en ce que** ledit complexe présente une épaisseur comprise entre 10 et 40 millimètres.

4. - Dispositif de végétalisation d'un bâtiment selon la revendication 1 **caractérisé en ce que** ledit complexe est imprégné d'une matière nutritive.

5. - Dispositif de végétalisation d'un bâtiment selon la revendication 1 **caractérisé en ce que** ledit complexe est fixé par agrafage sur ladite plaque rigide (1) par une partie au moins de ses bords.

6. - Dispositif de végétalisation d'un bâtiment selon la revendication 1 **caractérisé en ce qu'**il comporte au moins un programmateur électronique activant une électrovanne ou une pompe via une sonde d'humidité positionné sur une zone dudit complexe afin d'irriguer lesdits modules et transmettre les informations à distance.

7. - Système de végétalisation d'un bâtiment comportant d'une part, une structure porteuse et d'autre part au moins un dispositif de végétalisation d'un bâtiment selon l'une quelconque des revendications précédentes fixé sur ladite structure porteuse par des vis auto perceuses en acier inoxydable avec rondelle EPDM comprimant la structure porteuse en plusieurs points desdits modules.

8. - Système de végétalisation d'un bâtiment selon la revendication précédente **caractérisé en ce qu'**il comporte en outre un moyen d'alimentation en eau desdits modules.

9. - Système de végétalisation d'un bâtiment selon la revendication 7 **caractérisé en ce que** lesdits modules sont montés de manière amovible sur la structure porteuse en masquant dans sa majorité cette dernière.

10. - Dispositif de végétalisation d'un bâtiment selon les revendications 1 à 6 **caractérisé en ce qu'**il comporte au moins une source d'énergie renouvelable, par exemple une éolienne (9) ou un panneau photovoltaïque positionné sur une zone dudit complexe afin d'alimenter les éléments de celui-ci (programmateur, électrovanne, sondes...) utilisant le courant électrique pour fonctionner.

11. - Dispositif de végétalisation d'un bâtiment selon la revendication 10 **caractérisé en ce qu'**il comporte au moins un capteur connecté de mesure des indicateurs climatiques et un module de communication pour la transmission de ces informations à distance à un serveur.

12. - Dispositif de végétalisation d'un bâtiment selon la revendication 11 **caractérisé en ce qu'**il comprend un boîtier émetteur WIFI étanche équipé d'une sonde digitale d'humidité/température/pression atmosphérique et d'un récepteur WIFI raccordé au réseau commandant l'envoi d'alerte en cas de défaillance du système automatisé.

## Patentansprüche

1. Vorrichtung für eine modulare Begrünung eines Gebäudes, die aus mehreren Modulen (10, 20) beschaffen ist, die jeweils auf einer ihrer Hauptflächen sichtbare Vegetationselemente vorweisen, wobei die Module (10, 20) in der Form eines Trägers vorliegen, mit allgemeiner flacher Beschaffenheit, mit quaderförmiger Form, von geringer Dicke relativ zu seinen seitlichen Abmessungen und mit einem Boden, der aus einer starren Platte (1) und mindestens zwei soliden Seitenwänden (12, 13) ausgebildet ist, wobei die offene Fläche des Moduls, die dem Boden (1) gegenüberliegt, den Durchgang von Vegetationselementen ermöglicht, wobei der Boden (1) durch einen mehrschichtigen Anbaukomplex bedeckt ist, umfassend aufeinanderfolgend mindestens ein erstes faseriges Kunststoffmaterial (2) und ein flexibles Gitter (4), **dadurch gekennzeichnet, dass**
- der Komplex durch zwei Kunststofffilzlagen (2, 3), mit einer Dicke von 10 Millimetern und einem Gewicht von 400 bis 600 g/m², und einen Kern ausgebildet ist, der aus einem flexiblen Gitter (4) aus Kunststoff mit Maschen ausgebildet ist, die einen Querschnitt von einigen Millimetern vorweisen, das zwischen den zwei Lagen (2, 3) angeordnet ist
- die Verbindung zwischen benachbarten Modulen (10, 20) durch eine Kante-zu-Kante-Annäherung zwischen einer unteren Kante eines ersten Moduls und einer oberen Kante eines benachbarten Moduls gewährleistet wird, wobei die untere Kante des ersten Moduls (10) einen Rand (11) vorweist, der sich von der Außenseite der Platte (10) erstreckt, der komplementär zu einem Rand (21) ist, der sich von der Innenseite der benachbarten Platte (20) erstreckt
- wobei die Vorrichtung eine poröse oder Perforationen vorweisende Leitung (6), die entlang eines oberen Stegs verläuft, für die Wasserversorgung und in einem unteren Teil eine Wasserrückgewinnungsrinne (16) aufweist.

2. Vorrichtung für die Begrünung eines Gebäudes nach Anspruch 1, **dadurch gekennzeichnet, dass** mindestens eines der faserigen Kunststoffmaterialien (2, 3) aus einer Filzlage aus kardierten Kunststofffasern mit einem Gewicht zwischen 300 und 800 Gramm pro Quadratmeter beschaffen ist, die auf eine Polyethylen- oder Polypropylenfolie kardiert oder genäht sind.

3. Vorrichtung für die Begrünung eines Gebäudes nach Anspruch 1, **dadurch gekennzeichnet, dass** der Komplex eine Dicke zwischen 10 und 40 Millimetern vorweist.

4. Vorrichtung für die Begrünung eines Gebäudes nach Anspruch 1, **dadurch gekennzeichnet, dass** der Komplex mit einem Nährstoff imprägniert ist.

5. Vorrichtung für die Begrünung eines Gebäudes nach Anspruch 1, **dadurch gekennzeichnet, dass** der Komplex durch Verklammern an der starren Platte (1) durch mindestens einen Teil seiner Kanten befestigt wird.

6. Vorrichtung für die Begrünung eines Gebäudes nach Anspruch 1, **dadurch gekennzeichnet, dass** es mindestens einen elektronischen Programmierer aufweist, der über eine Feuchtigkeitssonde, die in einem Bereich des Komplexes positioniert ist, ein Magnetventil oder eine Pumpe aktiviert, um die Module zu bewässern und die Informationen aus der Ferne zu übertragen.

7. System für die Begrünung eines Gebäudes, das einerseits eine Trägerstruktur und andererseits mindestens eine Vorrichtung für die Begrünung eines Gebäudes nach einem der vorstehenden Ansprüche aufweist, die an der Trägerstruktur durch selbstbohrende Schrauben aus rostfreiem Stahl mit einer EPDM-Unterlegscheibe befestigt ist, die die Trägerstruktur an mehreren Punkten der Module komprimiert.

8. System für die Begrünung eines Gebäudes nach dem vorstehenden Anspruch, **dadurch gekennzeichnet, dass** es ferner ein Mittel für die Wasserversorgung der Module aufweist.

9. System für die Begrünung eines Gebäudes nach Anspruch 7, **dadurch gekennzeichnet, dass** die Module auf der Trägerstruktur abnehmbar montiert sind und den Großteil dieser letzteren verbergen.

10. Vorrichtung für die Begrünung eines Gebäudes nach den Ansprüchen 1 bis 6, **dadurch gekennzeichnet, dass** sie mindestens eine Quelle von erneuerbarer Energie aufweist, beispielsweise ein Windkraftwerk (9) oder ein Photovoltaikpaneel, das in einem Bereich des Komplexes positioniert ist, um die Elemente davon (Programmierer, Magnetventil, Sonden...) zu versorgen, die den elektrischen Strom zum Betrieb nutzen.

11. Vorrichtung für die Begrünung eines Gebäudes nach Anspruch 10, **dadurch gekennzeichnet, dass** sie mindestens einen angeschlossenen Sensor zum Messen von Klimaindikatoren und ein Kommunikationsmodul für die Fernübertragung dieser Informationen an einen Server aufweist.

12. Vorrichtung für die Begrünung eines Gebäudes nach Anspruch 11, **dadurch gekennzeichnet, dass** sie ein wasserdichtes WIFI-Sendergehäuse, das mit einer digitalen Feuchtigkeits-/Temperatur-/Atmosphärendrucksonde ausgestattet ist, und einen Wi-Fi-Empfänger umfasst, der mit dem Netzwerk verknüpft ist, der das Senden einer Warnung im Falle eines Ausfalls des automatisierten Systems steuert.

## Claims

1. Modular greening device for a building, consisting of multiple modules (10, 20) each having visible vegetation elements on one of the large faces thereof, said modules (10, 20) having the form of a generally flat, parallelepiped-shaped support, which is thin in relation to its lateral dimensions and with a base which is formed by a rigid plate (1) and at least two solid lateral walls (12, 13), the open face of the module which is opposite said base (1) enabling the vegetation elements to pass therethrough, said base (1) being covered by a multilayer culture complex successively comprising at least a first fibrous synthetic material (2) and a flexible grating (4), **characterized in that**
- said complex is formed by two sheets of synthetic felt (2, 3) with a thickness of 10 millimeters, and a weight ranging from 400 to 600 g/m², and a core formed by a flexible grate (4) made of plastics material, with a mesh having a cross-section of a few millimeters, arranged between said two sheets (2, 3)
- the joining of adjacent modules (10, 20) is provided by a butt joint between a lower edge of a first module and an upper edge of an adjacent module, the lower edge of the first module (10) having a flange (11) extending on the outer side of the plate (10), complementary to a flange (21) extending on the inner side of the adjacent plate (20)
- said device comprising a porous or perforated pipe (6) running along an upper border for supplying water and, in a lower part, a water collection gutter (16).

2. Greening device for a building according to claim 1, **characterized in that** at least one of said fibrous synthetic materials (2, 3) consists of a felt sheet made of carded synthetic fibers weighing between 300 and 800 grams per square meter, carded or needled onto a polyethylene or polypropylene film.

3. Greening device for a building according to claim 1, **characterized in that** said complex has a thickness of between 10 and 40 millimeters.

4. Greening device for a building according to claim 1, **characterized in that** said complex is impregnated with a nutritive material.

5. Greening device for a building according to claim 1,
**characterized in that** said complex is secured by stapling to said rigid plate (1) by at least some of its edges.

6. Greening device for a building according to claim 1, **characterized in that** it comprises at least one electronic programmer activating a solenoid valve or a pump via a moisture sensor which is positioned on a region of said complex in order to irrigate said modules and transmit the information remotely.

7. Greening system for a building comprising a support structure and at least one greening device for a building according to any one of the preceding claims secured to said support structure by self-drilling stainless steel screws, with an EPDM washer compressing the support structure at multiple points of said modules.

8. Greening system for a building according to the preceding claim, **characterized in that** it further comprises a means for supplying water to said modules.

9. Greening system for a building according to claim 7, **characterized in that** said modules are removably mounted on the support structure, masking the majority of the support structure.

10. Greening device for a building according to claims 1 to 6,
**characterized in that** it comprises at least one renewable energy source, for example a wind turbine (9) or a photovoltaic panel positioned on a region of said complex in order to power the elements thereof (programmer, solenoid valve, sensors, etc.) using the electric current to operate.

11. Greening device for a building according to claim 10, **characterized in that** it comprises at least one smart sensor for measuring climatic indicators and a communication module for transmitting this information remotely to a server.

12. Greening device for a building according to claim 11,
**characterized in that** it comprises a sealed Wi-Fi transmitter box equipped with a digital moisture/temperature/atmospheric pressure sensor and a Wi-Fi receiver connected to the network, which controls the sending of alerts in the event of failure of the automated system.
